# EUROPEAN PATENT APPLICATION

(11) **EP 4 047 619 A1**
(43) Date of publication of application: **24.08.2022**
(21) Application number: 20892502.4
(22) Date of filing: 19.11.2020
(51) Int. Cl.: G21F 9/04

(54) **METHOD FOR PROCESSING LIQUID TRITIUM-CONTAINING RADIOACTIVE WASTE**

(30) Priority: 27.11.2019 RU 2019138258
(71) Applicant: Remez Alonso, Victor, 17480 Roses, Girona (ES)
(72) Inventor: Remez Alonso, Victor, 17480 Roses, Girona (ES)
(74) Representative: Benatov, Samuil Gabriel
(86) International application number: PCT/RU2020/000619
(87) International publication number: WO 2021/107811

(57) **Abstract**

The invention relates to technology for processing liquid radioactive waste containing, inter alia, tritium isotopes, which are formed in various nuclear industry plants, and also during decommissioning of such plants. The technical result of the claimed invention consists in simplifying the technological procedure for processing liquid radioactive waste containing, inter alia, tritium isotopes by excluding complicated and lengthy operations associated with testing a concrete mixture produced from deactivated liquid radioactive waste, and also in increasing the ecological safety by reducing the size of areas for storage of the waste produced during the processing of the liquid radioactive waste. The claimed technical result is achieved in that a method for processing liquid radioactive waste containing, inter alia, tritium isotopes involves removing radioactive substances from the liquid radioactive waste so as to produce a low-level waste solution, and introducing a binder into the low-level waste solution produced in order to prepare a concrete mixture which complies with structural, radioecological, and sanitary and hygiene requirements, wherein components that have a negative effect on the technical characteristics of the concrete mixture being produced are removed from the low-level waste solution before the binder is added.

## Description

The invention relates to technology for processing liquid radioactive waste containing, inter alia, tritium isotopes, which are formed in various nuclear industry plants, and also during decommissioning of such plants.

There are more than 130 research demonstration and industrial nuclear reactors that are overage, and there will be more than 200 power units decommissioned by 2024 globally. Experts predict that the total volume of radioactive wastes will be 1,600,000 tons after decommissioning of 125 power units within the EEC countries. Most nuclear facilities have temporary storages with liquid radioactive wastes stored in the form unacceptable for long-term storage (bottoms, soluble saline fusion cakes, etc.). This has invoked the need to address this issue so as to minimize the volume of wastes subject for long-term storage by using economically and technically acceptable technologies. Tritium-contaminated aqueous solutions represent the highest difficulties in treatment since this requires very complicated, expensive and energy-intensive equipment. Tritium is a very weak beta-emitter with the emission energy of 5.7 keV, and sanitary standards for concentration of tritium in solutions discharged to the environment are limited by 7,000 Bq/kg.

There are methods for processing radioactive wastes by conditioning them in a stable solid medium, namely, their cementing (ref. Russian patents Nos. 2132095, 2218618, 2309472). Radioactive wastes are reliably conditioned but their volume rises more than 2.5 times during cementing taking into account the volume of containers used to store the cement compound, which results in high costs for reliable isolation and storage of solid radioactive wastes in special storages, which reduces their environmental safety in general.

There are also methods for processing liquid radioactive wastes that reduce their volumes to the maximum extent in order to produce radioactive sludge and used absorbents in the form suitable for disposal and liquid non-radioactive wastes (low-level waste solutions) that are further treated afterwards (conditioned).

There are methods for processing radioactive wastes (ref. Russian patent No. 2122753, US patent US8753518) comprising treatment of solutions from radionuclides followed by conditioning through evaporation of low-level waste solutions treated from radionuclides in order to produce dry salts or saline fusion cake to be stored as non-radioactive chemical wastes.

A common disadvantage of these methods is that they produce a high volume of chemical wastes due to evaporation of non-radioactive chemical wastes and that their transportation and storage at special landfills requires special monitoring, which reduces their environmental safety.

There is a method for treating liquid radioactive wastes from tritium comprising evaporation and conditioning, cold and hot isotopic chemical exchange, electrolysis producing hydrogen, tritium-treated water (residual tritium content below 7,500 Bq/I), tritium concentrate, and saline concentrate (ref. Russian utility model patent No. 126185, Unit for Treatment of Liquid Radioactive Wastes from Tritium, 8 IPC G21F 9/04, priority as of 27.08.2012, published on 20.03.2013).

A disadvantage of this method is that it is very complicated, energy-intensive and expensive. Moreover, a complex multi-stage energy-intensive technology is used to produce final products each requiring own type of disposal, namely incineration of electrolysis hydrogen to prevent discharge of tritium-containing concentrate to the atmosphere, container disposal of tritium concentrate that is conditioned in the form of titanium hydride, cementing and transfer of saline concentrate for disposal (radioactive wastes), which complicates this method in general and reduces its environmental safety. The produced water treated from tritium (residual tritium content below 7,600 Bq/I) is discharged, which also improves environmental safety of this method since tritium (even within the safe limits) has a harmful and unpredictable effect on the environment.

There is a method for separating low-level waste solution obtained after removal of most radioactive substances from liquid radioactive wastes into acid and alkaline components by electrolysis, wherein the acid component is fed to the settler to be further used in processing of liquid radioactive wastes, and the alkaline component is used in manufacturing concrete containers based on slag cement (ref. Youth Speaking to the Nuclear Industry of Ukraine: Collection of the 2nd Conference in Odessa, September 12-13, 1995, edited by S. V. Barabashev. Odessa: Ukraine Nuclear Community, 1995. p. 15).

A disadvantage of the said method is that it is very complicated energy-intensive and non-universal, especially on an industrial scale, since the separation of the low-level waste solutions produces alkaline and acid components that are used in a procedure for processing liquid radioactive wastes.

There is a method for processing liquid radioactive wastes comprising oxidizing of wastes, separation of sludges, colloids and suspended solids from the liquid phase and removal of radionuclides from the liquid phase for further disposal using selective absorbents and filters where the low-level waste solution treated from radionuclides is conditioned by evaporation to form solid salts that stored as non-radioactive chemical wastes (ref. the Russian invention patent No. 2577512 Method for Processing Liquid Radioactive Wastes and Their Disposal, 8 IPC G21F 9/00, priority as of 29.12.2014, published on 20.03.2016).

A disadvantage of the method is that it produces secondary chemical wastes (solid non-radioactive salts) that are stored at special landfills and require special monitoring, which reduces its environmental safety.

The most similar method to the claimed invention is the method for processing liquid radioactive waste containing, inter alia, tritium isotopes (Russian patent No. 2706019 priority as of 21.09.2018), comprising removal of radioactive substances from liquid radioactive wastes to produce a low-level waste solution, conditioning of removed radioactive wastes to the form meeting the criteria of acceptability for disposal and introducing the produced low-level waste solution of the binder and the aggregate to make a concrete mixture complying with construction, radioecological and sanitary-hygienic requirements.

A disadvantage of this method is the need for complex and long-term tests of specimens of the produced concrete mixture for compliance with construction, radioecological and sanitary-hygienic requirements. These tests can take weeks and require mechanical strength, frost resistance, water tightness, leaching of harmful substances, etc., to be examined. Without such tests, it is impossible to manufacture commercial concrete mixtures made of LRW treated from radionuclides. It is extremely complicated to select the conditions for producing high-quality concrete mixtures of decontaminated drain waters and bottoms of NPPs having various compositions in each storage vessel. Such tests being conducted in NPP labs produce significant amounts of solid wastes (residues of tested concrete specimens).

The objective of the claimed invention is to develop a procedure to minimize the volume of wastes in processing of liquid radioactive wastes containing, inter alia, tritium isotopes.

The technical result of the claimed invention consists in simplifying the technological procedure for processing liquid radioactive waste containing, inter alia, tritium isotopes by excluding complicated and lengthy operations associated with testing a concrete mixture produced from deactivated liquid radioactive wastes, and also in increasing the ecological safety by reducing the size of areas for storage of the waste produced during the processing of the liquid radioactive waste.

The claimed technical result is achieved in that a method for processing liquid radioactive waste containing, inter alia, tritium isotopes involves removing radioactive substances from the liquid radioactive waste so as to produce a low-level waste solution, and introducing a binder into the low-level waste solution produced in order to prepare a concrete mixture which complies with structural, radioecological, and sanitary and hygiene requirements, wherein components that have a negative effect on the technical characteristics of the concrete mixture being produced are removed from the low-level waste solution before the binder is added.

Radioactive substances removed from LWR are conditioned into a form satisfying the acceptability criteria for disposal.

Before adding the binder, the low-level waste solution is treated from components negatively affecting the quality of the produced concrete mixture by using ion exchange, evaporation, mechanical or membrane filters or combination of these methods. These components include suspensions and soluble salts that have a negative effect on such concrete characteristics as compression strength, axial elongation strength, frost resistance, water tightness, mean density, etc.

The components negatively affecting the quality of the produced concrete mixture can be removed before LWR decontamination. The composition of the produced low-level waste solution is pH corrected before using as a solution for a concrete mixture in order to ensure the required parameters. The low-level waste solution can be further diluted by utility water, condensate, sea water, etc.

Cement, silicates, gypsum, bituminous concrete, polymer concrete, sulfur concrete, ash, bentonite, etc., can be used as a binder, while sand, crushed rocks, pebbles, etc. are used as an aggregate. Moreover, the low-level waste solution can be further introduced with additives, namely, mineral aggregates, water reducers, stabilizers, etc.

The produced concrete mixture can be used to manufacture normal and special concrete used for construction blocks and various structures.

Introducing a binder and an aggregate into the produced low-level waste solution after removing most radioactive substances from liquid radioactive wastes helps avoid a complex and energy-intensive conditioning procedure, which significantly simplifies processing of liquid radioactive wastes containing, inter alia, tritium isotopes, and also improves environmental safety by reducing areas of storing wastes, since bringing the low-level waste solution into such a stable solid form as concrete requires no special monitoring in storage and further use since the produced concrete mixture complies with structural, radioecological, and sanitary and hygiene requirements.

Before removal of radionuclides from liquid radioactive wastes containing, inter alia, tritium isotopes, the processing of liquid radioactive wastes can include oxidizing of wastes, separation of sludges, colloids and suspended solids from the liquid phase and removal of radionuclides from the liquid phase for further disposal using selective absorbents and filters followed by conditioning of the removed radioactive substances into the form satisfying the acceptability criteria for disposal. The conditioned radioactive wastes satisfying the acceptability criteria for disposal are transported for disposal into special storages. All these stages of processing and disposal can be done using any known method.

It is unreasonable to store the produced low-level waste solutions in liquid form, since they are extensive and can be chemically active, which is environmentally hazardous (they can penetrate soil or water bodies), therefore they are conditioned, for example, by evaporation. After complex and energy-intensive conditioning of low-level waste solutions (for example, by evaporation) before producing dry salts, the concentration of radioactive substances in dry salts rises several times, so these wastes must be stored at special landfills. If the solution contains radionuclides in the amount of 100 Bq/kg after removal of radioactive substances from liquid radioactive wastes, then the dry substance activity after its 10X evaporation to obtain dry salts delivered to the chemical waste landfill will be 1,000 Bq/kg, which is unacceptable, so liquid radioactive wastes must be treated to 10-20 Bq/kg, which requires a high number of absorbents, reagents, and complex technologies. In some cases, liquid radioactive wastes must be evaporated by 100-200 times to produce a dry substance delivered to the chemical waste landfill, which makes the treatment of liquid radioactive wastes even more complicated.

According to the claimed method, the low-level waste solution obtained after decontamination of liquid radioactive wastes and containing radionuclides in the amount of 100 Bq/kg, for example, is not concentrated but diluted by various components (binder, aggregate, additives) necessary to produce a high-quality concrete mixture containing several dozen Bq/kg, which corresponds to the level for exemption for activity and radionuclides (IAEA safety standards, GSR Part 3, Radiation Protection and Safety, p. 148, Table 1.2).

Moreover, it should be noted that LWRs containing, inter alia, tritium isotopes and accumulated at NPPs mainly contain borates (at NPPS with water-cooled reactors) and nitrates (at NPPS with high-power pressure-tube reactors), and these substances are widely used in industrial construction to improve the quality of concretes and providing them with bactericide properties (protection against biological destruction) and to correct the setting time especially at low temperatures.

To use solutions obtained after LWR decontamination as mixing water to produce concrete mixtures, the concrete mixture specimens must be subject to complicated and long-term testing. Decontaminated solutions may contain various components affecting the quality of the resulting concrete mixture. To produce some types of concrete, suspensions must be removed from the mixing water, other types require treatment from chlorine ions, etc. Harmful components can be removed from decontaminated solutions by ion exchange, mechanical filtration, evaporation, dilution, membrane units or a combination of these methods.

There are no technical solutions having the combination of essential features of the claimed invention, so the invention complies with the patentability criterion of novelty.

The claimed essential features suggesting the indicated technical result are not explicitly found in the state of the art, so the invention complies with the patentability criterion of inventive level.

The patentability condition of industrial applicability is confirmed by the following practical examples.

### Example 1.

Liquid radioactive wastes containing radionuclides of tritium, cesium, strontium, iodine, antimony and uranium were treated according to the method described in Russian patent No. 2577512. The decontaminated solution comprised 3.2 g/l of chlorides, 4.1*10⁵ Bq/kg of tritium with the total activity of gamma and alpha-emitting isotopes below 100 Bq/kg. To manufacture prestressed reinforced concrete structures, the mixing water may contain no more than 500 mg/l of chloride ions (GOST 23732-2011), so the decontaminated solution was further treated at the membrane unit to obtain the chloride ion concentration below 50 mg/l. The said solution was then used to make a concrete mixture for prestressed reinforced concrete structures complying with all necessary standards. Tritium concentration in the resulting structures was below 9.2*10⁴ Bq/kg, which complies with IAEA standards (GSR Part 3).

### Example 2.

Liquid radioactive wastes produced by disposal of solution from the storage pool of fuel elements stored at the NPP containing 7.2 g/l of boron acid, isotopes of tritium, cesium, silver, cobalt and antimony were decontaminated using the method described in Russian patent No. 2577512. The decontaminated solution comprised 4.2 g/l of boron acid, 4.8*10⁵ Bq/kg of tritium with the total activity of gamma and alpha-emitting isotopes below 100 Bq/kg and pH = 3.1. According to GOST 23732-2011 Water for Concrete and Mortars, mixing water pH cannot be less 4, so utility water with pH = 7.9 was added to the decontaminated solution (200 g of water per 1 kg of solution), which resulted in pH = 4.7 in the decontaminated solution, and this solution could be used to produce concrete mixtures having bactericide properties preventing destruction of concrete structures by bacteria.

### Example 3.

Liquid radioactive wastes produced by collection of ground waters containing 3 g/kg of suspended solids, 14.2 g/kg of soluble salts, isotopes of tritium, cesium, strontium, cobalt and uranium were decontaminated using the method described in Russian patent No. 2577512. The decontaminated solution was evaporated at the evaporation unit, and the resulted condensate contained 4.2*10⁵ Bq/kg of tritium and complied with GOST 23732-2011 requirements to mixing water of concrete mixtures for producing concrete non-reinforced structures and structures with no prestressed reinforcement.

The studies of the concrete specimens obtained in examples 1-3 have shown that they have strength class B35 (42-46 MPa), frost resistance grade F200, moisture absorption (% by weight) 1.23÷1.25, water tightness (MPa) 1.73÷1.75 (W4). Leaching of radionuclides from the studied specimens evaluated using standard methods is below regulatory limits.

Characteristics of the produced concrete mixtures confirm that the concretes can be used as normal concretes (for industrial and civil buildings) as special concretes (hydraulic, road, heat insulation, decorative) and special-purpose concretes (chemically resistant, heat resistant, sound absorbing, for radioactive waste storages, etc.).

Processing of 100 m³ of liquid radioactive wastes containing, inter alia, tritium isotopes, using the proposed method will result in about 3.5 m³ (together with the package) conditioned radioactive wastes that will be sent in non-returnable containers to special storages of radioactive wastes and about 450 m³ of normal and special concrete used for construction blocks and various structures.

In this manner, the claimed invention, namely the method for processing liquid radioactive wastes containing, inter alia, tritium, ensures simplified processing of liquid radioactive wastes by avoiding complex and energy-intensive conditioning of the low-level waste solution treated from radionuclides and improves environmental safety by reducing the area for storage of wastes produced in processing of liquid radioactive wastes.

## Claims

1. A method for processing liquid radioactive wastes containing, inter alia, tritium isotopes comprising removal of radioactive substances from the liquid radioactive wastes so as to produce a decontaminated low-level waste solution, and introducing a binder into the low-level waste solution produced in order to prepare a concrete mixture which complies with structural, radioecological, and sanitary and hygiene requirements **characterized in that** components that have a negative effect on the technical characteristics of the concrete mixture being produced are removed from the low-level waste solution before the binder is added.

2. A method for processing liquid radioactive wastes containing, inter alia, tritium isotopes according to claim 1 wherein the composition of the low-level waste solution is pH-corrected before being used as a mortar for the concrete mixture in order to ensure the required parameters.

3. A method for processing liquid radioactive wastes containing, inter alia, tritium isotopes according to claim 1 wherein the low-level waste solution is further diluted by utility water, condensate, sea water.

4. A method for processing liquid radioactive wastes containing, inter alia, tritium isotopes according to claim 1 wherein cement, silicates, gypsum, bituminous concrete, polymer concrete, sulfur concrete, ash, bentonite are used as a binder, while sand, crushed rocks, pebbles are used as an aggregate.

5. A method for processing liquid radioactive wastes containing, inter alia, tritium isotopes according to claim 1 wherein the low-level waste solution is further introduced with additives, namely, mineral aggregates, water reducers, stabilizers.

6. A method for processing liquid radioactive wastes containing, inter alia, tritium isotopes according to claim 1 wherein the produced concrete mixture is used to make normal and special concrete used for construction blocks and various structures.

7. A method for processing liquid radioactive wastes containing, inter alia, tritium isotopes according to claim 1 wherein the radioactive substances removed from LWR are conditioned into a form satisfying the acceptability criteria for disposal.

8. A method for processing liquid radioactive wastes containing, inter alia, tritium isotopes according to claim 1 wherein the low-level waste solution is treated from components negatively affecting the quality of the produced concrete mixture by using ion exchange, evaporation, mechanical or membrane filters or combination of these methods before the binder is added.

9. A method for processing liquid radioactive wastes containing, inter alia, tritium isotopes according to claim 1 wherein the low-level waste solution is treated before adding the binder from components negatively affecting the quality of the produced concrete mixture such as compression strength, axial elongation strength, frost resistance, water tightness, mean density.

10. A method for processing liquid radioactive wastes containing, inter alia, tritium isotopes according to claim 1 wherein the solution is treated from soluble salts impairing technical characteristics of the produced concrete mixture before the binder is added to the decontaminated solution.

11. A method for processing liquid radioactive waste containing, inter alia, tritium isotopes according to claim 1 wherein the solution is treated from suspended solids impairing technical characteristics of the produced concrete mixture before the binder is added to the decontaminated solution.

12. A method for processing liquid radioactive waste containing, inter alia, tritium isotopes according to claim 1 wherein the components negatively affecting the quality of the produced concrete mixture are removed before LWR decontamination.
